# EUROPEAN PATENT SPECIFICATION

(11) **EP 3 822 193 B1**
(45) Date of publication and mention of the grant of the patent: **11.01.2023**
(21) Application number: 20195157.1
(22) Date of filing: 08.09.2020
(51) Int. Cl.: B65D 77/20

(54) **RECYCLABLE CONTAINER AND LIDDING CONSTRUCTION**
RECYCELBARE BEHÄLTER- UND DECKELKONSTRUKTION
RÉCIPIENT RECYCLABLE ET CONSTRUCTION D'OPERCULAGE

(30) Priority: 18.11.2019 US 201916687013
(43) Date of publication of application: 19.05.2021
(60) Divisional application: 22171659.0
(73) Proprietor: Sonoco Development, Inc., Hartsville, SC 29550 (US)
(72) Inventor: Truitt, Mary, Katherine, Hartsville, SC 29550 (US)
(74) Representative: Marks & Clerk LLP

(56) References cited:
- WO-A1-98/56686
- WO-A1-2016/144308
- DE-A1- 19 859 043
- GB-A- 2 380 180

## Description

### FIELD OF THE INVENTION

The present invention generally relates to recyclable packaging structures comprising a rigid resealable container which is closed with a flexible film.

### BACKGROUND OF THE INVENTION

Reclosable packages are widely used in the packaging of a variety of food and other products. Reclosable packages are convenient in that after the initial opening, consumers can close and reseal the package to better preserve the enclosed contents. Rigid packages are often utilized when the contents are fragile and/or could be easily crushed or broken. Rigid packages provide structural support to protect the contents of the package such that the contents remain intact during transportation, storage, and handling. Oftentimes, rigid packages are closed with flexible film which serves to contain, preserve, and protect the packaging contents. Flexible film is beneficial for such packaging structures because flexible film can be resealable, providing a longer shelf-life for the product contained therein.

Flexible film is not, however, recyclable through standard single stream recycling in the United States. The machinery in existing material recovery facilities is not capable of sorting flexible films, even if they are the correct mono-material film for a specific resin stream. Accordingly, even if the consumer is aware that the rigid tray is recyclable, the flexible film portion of a rigid packaging structure is often separated from the container by the consumer, disposed of with ordinary trash, and not recycled. WO 2016144308 describes a thermoplastic package that includes a tray and a lidding film that may be recycled in a polyethylene terephthalate (PET) recycling stream. GB 2380180 describes a resealable container that comprises an at least semi rigid receptacle with an opening, a lip surrounding the opening, a closure for closing the opening, and an adhesive which provides a releasable and resealable bond between the closure and the lip. DE 19859043 describes a resealable plastic packaging container consisting of a tray and a foil lid which in the sealing area is sealed to the tray such that it can be at least partly peeled back. WO 9856686 describes a package for a product consisting of a support for the product or dish and a plastic film or foil tied to the support for the product or plate by means of a weld seam.

### SUMMARY OF THE INVENTION

In an embodiment, the present invention provides a resealable, recyclable container structure comprising a polyethylene terephthalate rigid tray and a flexible polyethylene terephthalate film lidding. The tray has a bottom wall and at least one upwardly extending sidewall. The at least one sidewall terminates in a flange and the flange comprises at least one resealable zone and at least one permanently affixed zone. The lidding is permanently affixed to the flange in the permanently affixed zone and resealably affixed to the flange in the resealable zone. The flexible film lidding consists of a mono-material film. The rigid tray and the film comprise the same polymer.

In another embodiment, the present invention provides a recyclable container structure comprising a polyethylene terephthalate rigid tray and a flexible polyethylene terephthalate film lidding. The tray has a bottom wall and at least one upwardly extending sidewall. The at least one sidewall terminates in a flange and the flange comprises at least one peelable zone and at least one permanently affixed zone. The lidding is permanently heat sealed to the flange in the permanently affixed zone and peelably affixed via a peelable adhesive to the flange in the peelable zone. The flexible film lidding consists of a mono-material film. The rigid tray and the film comprise the same polymer.

The accompanying drawings, which are incorporated in and constitute a part of this specification, illustrate one or more embodiments of the invention and, together with the description, serve to explain the principles of the invention.

### BRIEF DESCRIPTION OF THE DRAWINGS

**A** full and enabling disclosure of the present invention, including the best mode thereof directed to one of ordinary skill in the art, is set forth in the specification, which makes reference to the appended drawings, in which:
FIG. 1 is a perspective view of a resealable packaging structure in a closed embodiment of the invention;
FIG. 2 is a perspective view of a resealable packaging structure in an open embodiment of the invention;
FIG. 3 is a cross-sectional view of a resealable packaging structure, taken along line A-A, shown in FIG. 1, in an embodiment of the invention; and

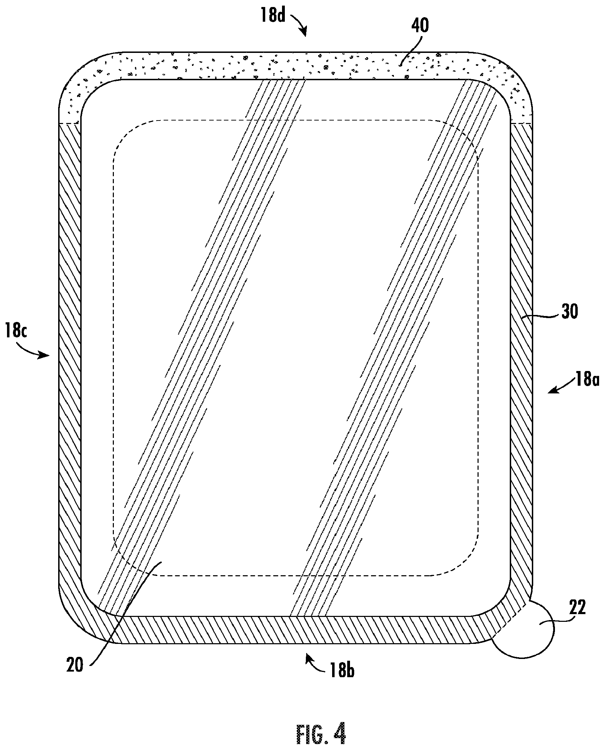

FIG. 4 is a top view of a resealable packaging structure in an embodiment of the invention.

Repeated use of reference characters in the present specification and drawings is intended to represent the same or analogous features or elements of the invention.

### DETAILED DESCRIPTION OF THE EMBODIMENTS

Reference will now be made in detail to presently preferred embodiments of the invention, one or more examples of which are illustrated in the accompanying drawings. Each example is provided by way of explanation of the invention, not limitation of the invention. In fact, it will be apparent to those skilled in the art that modifications and variations can be made in the present invention without departing from the scope thereof. For instance, features illustrated or described as part of one embodiment may be used on another embodiment to yield a still further embodiment. Thus, it is intended that the present invention covers such modifications and variations as come within the scope of the appended claims and their equivalents.

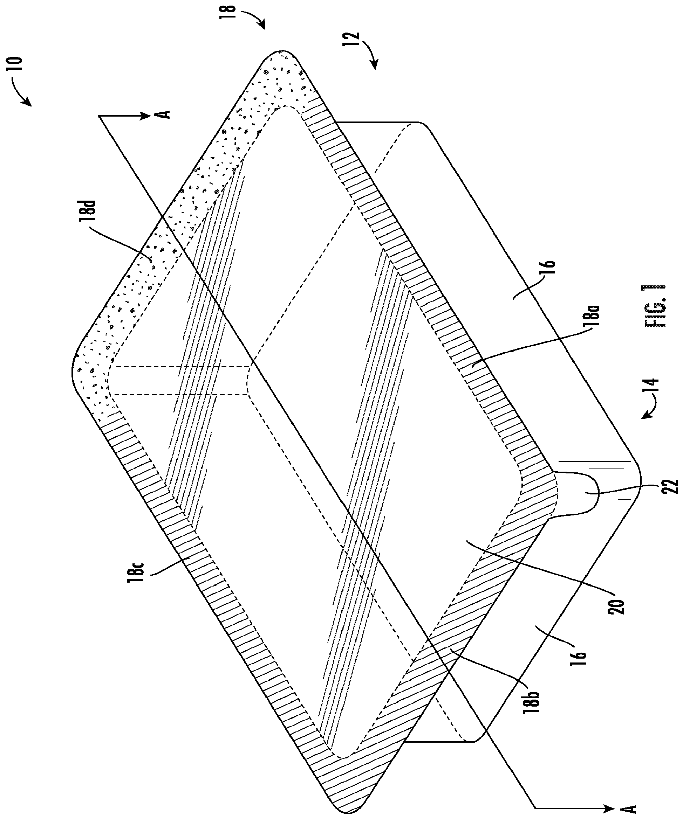

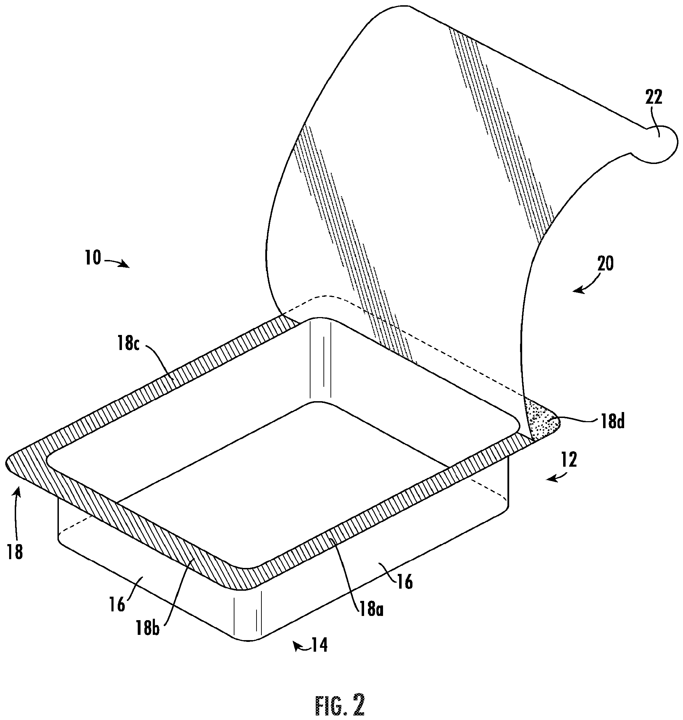

Turning to the drawings, FIGS. 1 and 2 illustrate an embodiment of the invention in a closed and open configuration, respectively. The inventive packaging structure 10 is illustrated as a tray 12 having a bottom 14 and four sides 16. However, this container shape should not be limiting and any container shape known in the art may be utilized. For example, the tray 12 could be a cylindrical, square, or triangular container in a given embodiment. In an embodiment, the rigid tray has at least a bottom wall and at least one wall extending upwardly therefrom.

In an embodiment, the at least one sidewall 16 of the tray 12 extends upwardly (or vertically) and terminates in a flange 18. In another embodiment, a flange 18 could be affixed to the sidewall 16. The flange 18 may extend outwardly (or horizontally) from the sidewall 16. In an embodiment, the flange 18 surrounds and defines an opening into the tray 12. In an embodiment, the flange 18 may include multiple flange portions 18a, 18b, 18c, and 18b which extend continuously around the periphery of the tray 12. The width of the flange 18 may vary based upon the dimensions of the tray 12 but should be sufficiently wide to accommodate sealing of a cover member thereto. Likewise, the thickness of the flange 18 may vary based upon the dimensions of the tray 12 and the containment needs thereof. In an embodiment, each of the multiple flange portions 18a, 18b, 18c, and 18b may be the same shape and size. In other embodiments, the multiple flange portions 18a, 18b, 18c, and 18b may have differing shapes and sizes. While four flange portions 18a, 18b, 18c, and 18b are shown, it should be understood that any number of flange portions are contemplated herein. For example, if the container is hexagonal in cross section, it may have six flange portions. If the container is cylindrical in cross section, it may have two flange portions or it may have five flange portions. Further, the flange portions need not match up with the sides of the container. For example, a square container may have five flange portions, wherein one of the flange portions comprises only a portion of the length of the sidewall. The flange portions may have different sizes and need not be the same length as a sidewall. Any combination of shape and number of flange portions is contemplated.

In an embodiment, a flexible film 20 is positioned over the tray 12 and adhered or sealed thereto. In an embodiment, the flexible film 20 is adhered to the flange 18. In other embodiments, the flexible film 20 may be adhered to a top edge or rim of the container.

In an embodiment, the flexible film 20 may be sealed to the tray 12 in a permanent manner along part of the flange, edge, or rim and adhered in a resealable manner along part of the flange, edge, or rim. That is, in a particular embodiment, the flexible film 20 may be resealably adhered to a plurality of the flange portions and permanently sealed to at least one flange portion. For example, in the embodiment shown, flange portions 18a, 18b, and 18c may be resealably adhered to the film 20 and flange portion 18d may be permanently adhered to the film 20.

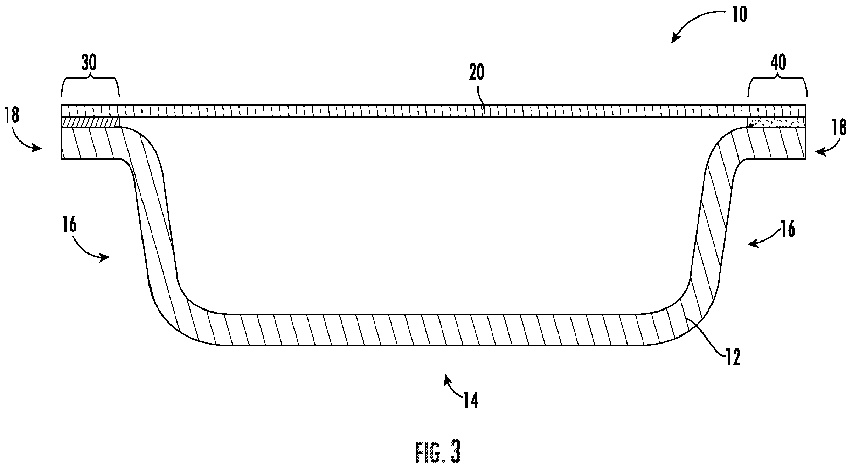

In an embodiment, the flange 18 may have a top surface. The flexible film 20 may be resealably adhered to a plurality of the flange portions, along their top surface, to form a resealable zone 30 (see FIG. 3). Similarly, the flexible film may be permanently sealed to at least one flange portion, along its top surface, to form a permanently adhered zone 40.

The resealable zone 30 may be easily peeled away from the tray 12 to reveal the contents of the container. The resealable zone 30 may additionally be replaceable back onto the flange 18 to reseal the film 20 to the tray 12. In an embodiment, in the permanently adhered zone 40, the film 20 may not be removed from the tray 12 without destruction of the film 20 and/or tray 12.

In an embodiment, the resealable zone 30 may comprise a majority of the flange surfaces. For example, if the tray 12 has a square or a rectangular cross-section, the resealable zone 30 may comprise approximately three of the four flange portions. In another example, the tray 12 may be cylindrical and the resealable zone 30 may comprise more than half of the circumference of the flange. In an embodiment, the permanently adhered zone 40 comprises a minority of the flange portions. In an embodiment, the permanently adhered zone 40 comprises one flange portion.

In an embodiment, the permanently adhered zone 40 comprises a portion, but not all, of the flange along one of the sidewalls of the container. In this embodiment, the resealable zone 30 may comprise all other portions of the flange. In an embodiment, the permanently adhered zone 40 comprises a corner of the container structure, along the flange. In this embodiment, the corner portion of the flange may be permanently affixed to the film 20, but the remainder of flange may be considered the resealable zone 30.

In an embodiment, an adhesive layer may be utilized to seal the flexible film 20 to the rigid tray 12. In this embodiment, a resealable adhesive, such as a pressure sensitive adhesive or a cohesive, may be utilized in the resealable zone 30. Likewise, a permanent adhesive may be utilized in the permanently adhered zone 40. The adhesive(s) may be applied to either the relevant flange portions or the film 20, before application of the film 20 to the tray 12. In an embodiment, the adhesive(s) may be pattern applied to the film 20 around the perimeter thereof, such that the adhesive(s) do not extend into the central portion of the film 20. In an embodiment, the permanent adhesive and resealable adhesive may overlap to some degree. Any resealable and/or permanent adhesives known in the art may be utilized. In an embodiment, the adhesive may be the same adhesive, but different coat weights may be utilized. For example, a heavier coat weight of the adhesive may be utilized in the permanently adhered zone 40, as compared to the resealable zone 30.

In another embodiment, the flexible film 20 may be inherently sealable to the rigid tray 12. That is, the film 20 itself may be heat sealable, for example, to the flange 18. In this embodiment, at least the permanently adhered zone 40 may be heat sealed, weld sealed, or otherwise permanently affixed to the flange 18. In this embodiment, the film 20 may be adhered to the flange 18 in the resealable zone 30 via a resealable adhesive, as described above. Alternatively, if the container is not designed to be resealable, the film 20 may be adhered to the flange 18 within the resealable zone 30 via a heat seal or other weld, but the heat and/or pressure applied within the resealable zone 30 may be less than was applied in the permanently adhered zone 40. This may comprise a process of selective heat-seal bonding. In this way, the film 20 may be easily removable from the flange 18 within the resealable zone (even if such is not resealable), but not from the flange 18 within the permanently adhered zone 40. It should be noted that while the term "resealable" is used herein, the film may be peelable, but not necessarily resealable, in some embodiments. Thus, the term "resealable" may be used interchangeably with the term "peelable," depending on the desired outcome for the container structure 10.

In another embodiment, a sealant layer may be utilized to seal the flexible film 20 to the rigid tray 12. For example, the flexible film 20 may be co-extruded with a sealant layer in such an embodiment. The sealant layer may comprise a permanent sealant and/or a resealable sealant. In an embodiment, film 20 with the sealant disposed thereon may be utilized as is or may have another adhesive applied thereto. For example, a film 20 may be coextruded with a permanent sealant disposed along one edge of the perimeter. The film 20 may then be coated with a pressure sensitive adhesive along the other edge of the perimeter. The film 20 may then be applied to the flange 18 of a container. Thus, any combination of adhesives, sealants, heat seals, and/or other types of seals may be utilized herein.

In an embodiment, a thumb tab 22 (or pull tab) may extend from an edge of the film. The thumb tab 22 may be adhesive-free, in an embodiment. The thumb tab 22 may be utilized to grip and pull the film 20 away from the flange 18. Likewise, in an embodiment, the central portion of the film 20 may be adhesive-free. In an embodiment, the central portion of the film 20 substantially aligns with the inner perimeter of the flange 18.

In an embodiment, the tray 12 is made from a polymeric material with a thickness providing for a rigid, or at least semi-rigid, reclosable package 10. When formed into the configuration of FIG. 1, the tray 12 has a substantial resistance to torsional and bending stresses thereby protecting the contents of the reclosable package 10. To add extra rigidity to the tray 12, strengthening ribs or other reinforcing structures may be utilized within the side walls 16. In an embodiment, the tray 12 is manufactured via thermoforming, injection molding, or blow molding.

In an embodiment, the flexible film 20 is a thin film polymer material which provides flexibility. The flexible film 20 comprises only one material - i.e. is a mono-material film. The flexible film 20 may comprise multiple layers of the same polymeric material. In related examples falling outside the scope of the invention, the flexible film may comprise multiple layers of different materials.

The tray 12 and the film 20 are made from the same material. Each of the tray 12 and the film 20 comprise polyethylene terephthalate ("PET"), the tray 12 being a rigid PET tray and the film 20 being a flexible PET lidding material. In this embodiment, the tray 12 and the film 20 can be recycled together without removing the film 20 from the tray 12. In an embodiment, the permanent adhesive, heat seal, lock-seal, or weld seal in the permanently adhered zone 40 is sufficiently strong to allow the film 20 to remain affixed to the tray 12 through a recycling sorting process, placing the film 20 and tray 12 into the correct recycling stream (PET).

In related examples falling outside the scope of the invention, any of polystyrene, polypropylene, polyethylene, or polyvinyl chloride could be utilized to form a rigid tray 12 and a flexible lidding 20, or the tray 12 and the film 20 may comprise different polymeric materials.

In an embodiment, the flexible film 20 comprises a barrier layer. Any barrier known in the art which provides a barrier to the passage of gases, liquids, water vapor or the like may be utilized.

In use, in an embodiment, after the consumer has opened the lidding 20 and removed the desired amount of product from the package 12, the consumer may lower the lidding onto the flange 18 and apply pressure to the film 20. The package 12 is thus resealed to inhibit the passage of air and moisture into the contents.

These and other modifications and variations to the present invention may be practiced by those of ordinary skill in the art, without departing from the scope of the present invention, which is more particularly set forth in the appended claims.

## Claims

1. A resealable, recyclable container structure comprising:
a polyethylene terephthalate rigid tray (12) comprising a bottom wall (14) and at least one upwardly extending sidewall (16), wherein the at least one sidewall (16) terminates in a flange (18) and wherein the flange (18) comprises at least one resealable zone (30) and at least one permanently affixed zone (40); and
a flexible polyethylene terephthalate film lidding (20), wherein the lidding (20) is permanently affixed to the flange (18) in the permanently affixed zone (40) and resealably affixed to the flange (18) in the resealable zone (30),
wherein the flexible film lidding (20) consists of a mono-material film; and
wherein the rigid tray (12) and the film lidding (20) comprise the same polymer.

2. The container structure of claim 1 or 2, wherein a permanent adhesive is disposed between the lidding (20) and the flange (18) in the permanently affixed zone (40).

3. The container structure of any preceding claim, wherein the lidding (20) and the flange (18) are heat sealed in the permanently affixed zone (40).

4. The container structure of any preceding claim, wherein a pressure sensitive adhesive is disposed between the lidding (20) and the flange (18) in the resealable zone (30).

5. The container structure of any preceding claim, wherein the tray (12) comprises four sidewalls (16) and the permanently affixed zone (40) of the flange (18) is aligned with one of the four sidewalls (16).

6. The container structure of claim 5, wherein the resealable zone (30) is aligned with three of the four sidewalls (16).

7. The container structure of any preceding claim, wherein the flange (18) has a top surface and the permanently affixed zone (40) and the resealable zone (30) are located on the top surface of the flange (18).

8. A recyclable container structure comprising:
a polyethylene terephthalate rigid tray (12) comprising a bottom wall (14) and at least one upwardly extending sidewall (16), wherein the at least one sidewall (16) terminates in a flange (18) and wherein the flange (18) comprises at least one peelable zone and at least one permanently affixed zone (40); and
a flexible polyethylene terephthalate film lidding (20), wherein the lidding (20) is permanently heat sealed to the flange (18) in the permanently affixed zone (40) and peelably affixed, via a peelable adhesive, to the flange (18) in the peelable zone,
wherein the flexible film lidding (20) consists of a mono-material film; and
wherein the rigid tray (12) and the film lidding (20) comprise the same polymer.

9. The container structure of claim 8, wherein
the tray (12) comprises four sidewalls (16) and the permanently affixed zone (40) of the flange (18) is aligned with one of the four sidewalls (16).

10. The container structure of claim 9, wherein the peelable zone is aligned with three of the four sidewalls (16).

11. The container structure of any of claims 8 to 10, wherein
the lidding (20) is coextruded with at least one sealant.

12. The container structure of any of claims 8 to 11, wherein the lidding (20) additionally comprises a thumb tab (22).

13. The container structure of any of claims 8 to 12, wherein the flange (18) has a top surface and the permanently affixed zone (40) and the peelable zone are located on the top surface of the flange (18).

## Patentansprüche

1. Wiederverschließbare, recycelbare Behälterstruktur, umfassend:
eine starre Polyethylenterephthalatauflage (12), umfassend eine Bodenwand (14) und mindestens eine sich nach oben erstreckende Seitenwand (16), wobei die mindestens eine Seitenwand (16) in einem Flansch (18) endet und wobei der Flansch (18) mindestens eine wiederverschließbare Zone (30) und mindestens eine dauerhaft befestigte Zone (40) umfasst; und
eine flexible Polyethylenterephthalat-Folienabdeckung (20), wobei die Abdeckung (20) in der dauerhaft befestigten Zone (40) dauerhaft an dem Flansch (18) befestigt ist und in der wiederverschließbaren Zone (30) lösbar an dem Flansch (18) befestigt ist,
wobei die flexible Folienabdeckung (20) aus einer Folie aus einem einzigen Material besteht; und
wobei die starre Auflage (12) und die Folienabdeckung (20) das gleiche Polymer umfassen.

2. Behälterstruktur nach Anspruch 1 oder 2, wobei ein Dauerklebstoff zwischen der Abdeckung (20) und dem Flansch (18) in der dauerhaft befestigten Zone (40) angeordnet ist.

3. Behälterstruktur nach einem der vorhergehenden Ansprüche, wobei die Abdeckung (20) und der Flansch (18) in der dauerhaft befestigten Zone (40) heißversiegelt sind.

4. Behälterstruktur nach einem der vorhergehenden Ansprüche, wobei ein Haftkleber zwischen der Abdeckung (20) und dem Flansch (18) in der wiederverschließbaren Zone (30) angeordnet ist.

5. Behälterstruktur nach einem der vorhergehenden Ansprüche, wobei die Auflage (12) vier Seitenwände (16) umfasst und die dauerhaft befestigte Zone (40) des Flansches (18) mit einer der vier Seitenwände (16) ausgerichtet ist.

6. Behälterstruktur nach Anspruch 5, wobei die wiederverschießbare Zone (30) mit drei der vier Seitenwände (16) ausgerichtet ist.

7. Behälterstruktur nach einem der vorhergehenden Ansprüche, wobei der Flansch (18) eine obere Oberfläche aufweist und sich die dauerhaft befestigte Zone (40) und die wiederverschließbare Zone (30) auf der oberen Oberfläche des Flansches (18) befinden.

8. Recycelbare Behälterstruktur, umfassend:
eine starre Polyethylenterephthalatauflage (12), umfassend eine Bodenwand (14) und mindestens eine sich nach oben erstreckende Seitenwand (16), wobei die mindestens eine Seitenwand (16) in einem Flansch (18) endet und wobei der Flansch (18) mindestens eine abziehbare Zone und mindestens eine dauerhaft befestigte Zone (40) umfasst; und
eine flexible Polyethylenterephthalat-Folienabdeckung (20), wobei die Folienabdeckung (20) in der dauerhaft befestigten Zone (40) dauerhaft an dem Flansch (18) heißversiegelt ist und in der abziehbaren Zone über einen abziehbaren Klebstoff abziehbar an dem Flansch (18) befestigt ist,
wobei die flexible Folienabdeckung (20) aus einer Folie aus einem einzigen Material besteht; und
wobei die starre Auflage (12) und die Folienabdeckung (20) das gleiche Polymer umfassen.

9. Behälterstruktur nach Anspruch 8, wobei
die Auflage (12) vier Seitenwände (16) umfasst und die dauerhaft befestigte Zone (40) des Flansches (18) mit einer der vier Seitenwände (16) ausgerichtet ist.

10. Behälterstruktur nach Anspruch 9, wobei die abziehbare Zone mit drei der vier Seitenwände (16) ausgerichtet ist.

11. Behälterstruktur nach einem der Ansprüche 8 bis 10, wobei die Abdeckung (20) mit mindestens einem Dichtungsmittel gemeinsam extrudiert ist.

12. Behälterstruktur nach einem der Ansprüche 8 bis 11, wobei die Abdeckung (20) zusätzlich eine Daumenlasche (22) umfasst.

13. Behälterstruktur nach einem der Ansprüche 8 bis 12, wobei der Flansch (18) eine obere Oberfläche aufweist und sich die dauerhaft befestigte Zone (40) und die abziehbare Zone auf der oberen Oberfläche des Flansches (18) befinden.

## Revendications

1. Structure de récipient recyclable, refermable, comprenant :
un plateau rigide en polyéthylène téréphtalate (12) comprenant une paroi inférieure (14) et au moins une paroi latérale s'étendant vers le haut (16), dans laquelle la au moins une paroi latérale (16) se termine dans une bride (18) et dans laquelle la bride (18) comprend au moins une zone refermable (30) et au moins une zone fixée de manière permanente (40) ; et
un opercule en film de polyéthylène téréphtalate flexible (20), dans laquelle l'opercule (20) est fixé de manière permanente à la bride (18) dans la zone fixée de manière permanente (40) et fixé de manière détachable à la bride (18) dans la zone refermable (30),
dans laquelle l'opercule en film flexible (20) est constitué d'un film en matériau unique ; et
dans laquelle le plateau rigide (12) et l'opercule en film (20) comprennent le même polymère.

2. Structure de récipient selon la revendication 1 ou 2, dans laquelle un adhésif permanent est disposé entre l'opercule (20) et la bride (18) dans la zone fixée de manière permanente (40).

3. Structure de récipient selon l'une quelconque des revendications précédentes, dans laquelle l'opercule (20) et la bride (18) sont thermoscellés dans la zone fixée de manière permanente (40).

4. Structure de récipient selon l'une quelconque des revendications précédentes, dans laquelle un adhésif sensible à la pression est disposé entre le couvercle (20) et la bride (18) dans la zone refermable (30).

5. Structure de récipient selon l'une quelconque des revendications précédentes, dans laquelle le plateau (12) comprend quatre parois latérales (16) et la zone fixée de manière permanente (40) de la bride (18) est alignée avec une des quatre parois latérales (16).

6. Structure de récipient selon la revendication 5, dans laquelle la zone refermable (30) est alignée avec trois des quatre parois latérales (16).

7. Structure de récipient selon l'une quelconque des revendications précédentes, dans laquelle la bride (18) présente une surface supérieure et la zone fixée de manière permanente (40) et la zone refermable (30) sont situées sur la surface supérieure de la bride (18).

8. Structure de récipient recyclable comprenant :
un plateau rigide en polyéthylène téréphtalate (12) comprenant une paroi inférieure (14) et au moins une paroi latérale s'étendant vers le haut (16), dans laquelle la au moins une paroi latérale (16) se termine en une bride (18) et dans laquelle la bride (18) comprend au moins une zone détachable et au moins une zone fixée de manière permanente (40) ; et
un opercule en film de polyéthylène téréphtalate flexible (20), dans laquelle l'opercule (20) est thermoscellé de manière permanente à la bride (18) dans la zone fixe permanente (40) et fixé de manière détachable, par le biais d'un adhésif détachable, à la bride (18) dans la zone détachable,
dans laquelle l'opercule en film flexible (20) est constitué d'un film en matériau unique ; et
dans laquelle le plateau rigide (12) et l'opercule en film (20) comprennent le même polymère.

9. Structure de récipient selon la revendication 8, dans laquelle :
le plateau (12) comprend quatre parois latérales (16) et la zone fixée de manière permanente (40) de la bride (18) est alignée avec l'une des quatre parois latérales (16).

10. Structure de récipient selon la revendication 9, dans laquelle la zone détachable est alignée avec trois des quatre parois latérales (16).

11. Structure de récipient selon l'une quelconque des revendications 8 à 10, dans laquelle l'opercule (20) est coextrudé avec au moins un produit d'étanchéité.

12. Structure de récipient selon l'une quelconque des revendications 8 à 11, dans laquelle l'opercule (20) comprend en outre une languette de pouce (22).

13. Structure de récipient selon l'une quelconque des revendications 8 à 12, dans laquelle la bride (18) présente une surface supérieure et la zone fixée de manière permanente (40) et la zone détachable sont situées sur la surface supérieure de la bride (18).
